# EUROPEAN PATENT APPLICATION

(11) **EP 2 557 038 A2**
(43) Date of publication of application: **13.02.2013**
(21) Application number: 12179091.9
(22) Date of filing: 02.08.2012
(51) Int. Cl.: B64D 13/06, B64C 11/48

(54) **Low pressure compressor bleed exit for an aircraft pressurization system**

(30) Priority: 11.08.2011 US 201113207741
(71) Applicant: Hamilton Sundstrand Corporation, Windsor Locks, CT 06096-1010 (US)
(72) Inventor: Finney, Adam M., Rockford, IL Illinois 61114 (US)
(74) Representative: Hull, James Edward

(57) **Abstract**

An aircraft pressurization system, includes an auxiliary compressor (42) for further compressing compressed air received from a low pressure compressor section (22) of a gas turbine engine (10) while the compressed air is below a predetermined pressure level; a bleed passage (40) for fluidically connecting the auxiliary compressor (42) to the low pressure compressor section (22); and an environmental control system (38) coupled to an output of the auxiliary compressor (42) for conditioning the compressed air to a predetermined level.

## Description

### FIELD OF INVENTION

The present invention relates to gas turbine engine bleed air, and in particular to the use of low-pressure compressor bleed air for an aircraft pressurization system that is extracted from a gas turbine engine compressor and augmented by an auxiliary compressor.

### DESCRIPTION OF RELATED ART

In a typical gas turbine engine, a compressor compresses air and passes that air along a primary flow path to a combustor where it is mixed with fuel and combusted. The combusted mixture expands and is passed to a turbine, which is forced to rotate. When used on an aircraft, the primary purpose of this system is to provide propulsive force for the aircraft.

In some gas turbine engines, a portion of the air compressed by the compressor is diverted from the primary flow path to a bleed inlet of a bleed air system. This bleed air can be used for a variety of purposes, such as to de-ice a wing or to provide pressurized air to a cabin of the aircraft. Because the bleed air is often at an undesirably high temperature, a heat exchanger is used to cool the bleed air. Bleeding off and cooling compressed air typically does not generate thrust or useful work, thus reducing the efficiency of the compressor and the entire gas turbine engine. Moreover, the heat exchanger takes up a relatively large amount of space and can increase the overall weight of the bleed air system.

### BRIEF SUMMARY

According to one aspect of the invention, an aircraft pressurization system includes an auxiliary compressor for further compressing compressed air received from a low pressure compressor section of a gas turbine engine while the compressed air is below a predetermined pressure level; a bleed passage for fluidically connecting the auxiliary compressor to the low pressure compressor section; and an environmental control system coupled to an output of the auxiliary compressor for conditioning the compressed air to a predetermined level.

According to another aspect of the invention, a method for pressurizing an aircraft includes receiving air compressed to a first pressure via a low pressure compressor section of a gas turbine engine; compressing, via an auxiliary compressor, the compressed air to a second pressure while the compressed air is below a predetermined pressure level; fluidically connecting, via a bleed passage, the auxiliary compressor to the low pressure compressor section; and conditioning the compressed air to a predetermined level via an environmental control system coupled to the auxiliary compressor.

Other aspects, features, and techniques of the invention will become more apparent from the following description taken in conjunction with the drawings.

### BRIEF DESCRIPTION OF THE SEVERAL VIEWS OF THE DRAWINGS

Referring now to the drawings wherein like elements are numbered alike in the FIGURES:
FIG. 1 illustrates a schematic view of a gas turbine engine having a low pressure compressor exit bleed system according to an embodiment of the invention; and
FIG. 2 illustrates a schematic view of a gas turbine engine having a gearbox assembly according to an embodiment of the invention.

### DETAILED DESCRIPTION

Embodiments of an aircraft pressurization system include a bleed energy system for extracting bleed air from a single bleed port at a low pressure compressor ("LPC") during all but the descent segment of an aircraft's flight and an auxiliary compressor for augmenting the aircraft pressurization system during the descent segment of the flight. Further embodiments are discussed below in detail. In one embodiment, the LPC bleed air provides adequate pressurization during the cruising segment while the auxiliary compressor conditions the LPC bleed air for adequate cabin pressurization during the descent segment.

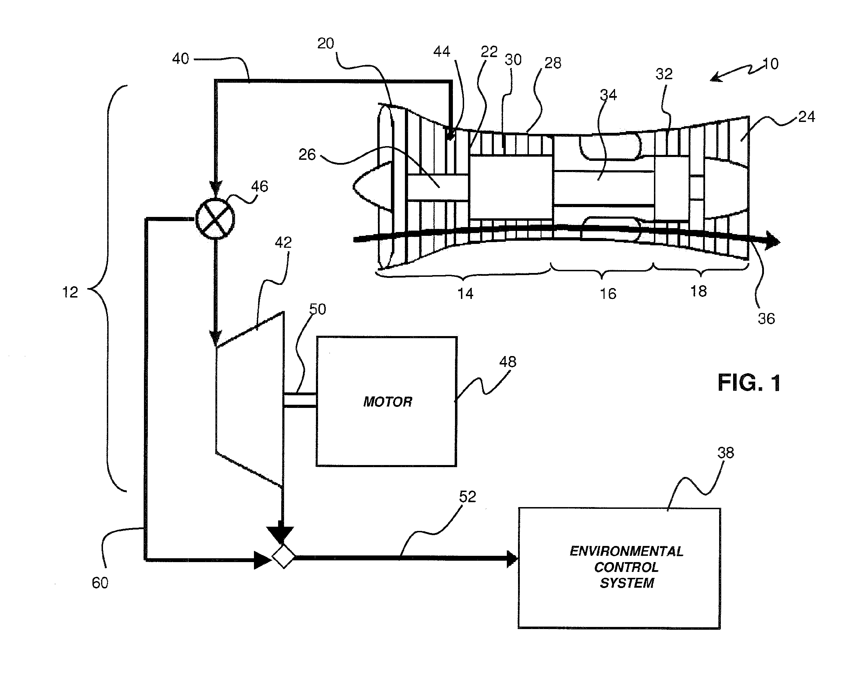

Referring now to FIG. 1 an example of a gas turbine engine 10 coupled to a bleed energy system 12 is illustrated. The gas turbine engine 10 includes a main compressor section 14, a main combustor section 16, and a main turbine section 18 arranged in a serial, axial flow relationship. The main compressor section 14 creates and provides compressed air that passes into the combustor section 16 where fuel is introduced and the mixture of fuel and compressed air is burned, generating hot combustion gases. The hot combustion gases are discharged to the main turbine section 18 where they are expanded to extract energy therefrom. Further, the gas turbine engine 10 includes a low pressure spool 20 including a low pressure compressor ("LPC") 22 and low pressure turbine 24 connected by low pressure shaft 26, and a high pressure spool 28 having a high pressure compressor 30 and high pressure turbine 32 connected by high pressure shaft 34, each extending from main compressor section 14 to main turbine section 18. Air flows from the main compressor section 14 to the main turbine section 18 along main flow path 36. The engine 10 incorporates a bleed energy system 12 for extracting compressed bleed air from a bleed port 44 connected to the LPC 22 in order to supply LPC bleed air to a cabin. In one embodiment, the LPC bleed air is used by an environmental control system (ECS) 38 to pressurize the cabin of an aircraft. In other embodiments, the LPC bleed air may be used for anti-icing or deicing, heating or cooling, and/or operating pneumatic equipment. It is to be appreciated that a plurality of bleed ports, such as bleed port 44, may be connect to the LPC 22 in order to supply LPC bleed air to the ECS 38 or to other components if needed.

Also shown in FIG. 1, the bleed energy system 12 includes a bleed passage 40 coupled to a shut-off valve 46 and an auxiliary compressor 42. Compressed air from LPC 22 is extracted from bleed valve 44, passes through bleed passage 40 and to auxiliary compressor 42 through shut-off valve 46. In one embodiment, shut-off valve 46 is selectively opened or closed to control the bleed air flow rate to the auxiliary compressor 42. In some situations, passing bleed air through auxiliary compressor 42 would reduce its temperature and pressure below desirable levels, such as when the engine 10 is operating at relatively low speeds and in particularly cold environments. In these situations, some or all of the bleed air can be diverted at shut-off valve 46, passed through bleed passage 60 and returned back to bleed passage 52. The bleed passage 40 provides a source of high-pressure engine air for pressurized air that is ultimately delivered to the ECS 38 by bleed passage 52 during the cruising segment of the aircraft's flight so as to provide pressurization during the longest segment of the flight when engine 10 efficiency is critical.

As illustrated, the auxiliary compressor 42 is mechanically connected to a motor 48 via shaft 50. The auxiliary compressor 42, powered by the aircraft electricity source (not shown), augments the compressed LPC bleed air when the bleed air cannot provide adequate pressurization to the ECS 38. It is to be appreciated that air entering bleed passage 40 is at a pressure and temperature substantially higher than what is needed by ECS 38. In one embodiment, the minimum bleed air pressure is at 20 psi (137.9 kPa) in order for ECS 38 to maintain cabin pressure to 11.8 psi (81.4 kPa) and provide fresh air at 0.55 Pounds (0.25 kg) Mass/Minute/Person.

In operation, LPC bleed air is extracted through bleed valve 44 and fluidically communicated to auxiliary compressor 42 through bleed passage 40 to provide aircraft pressurization during all segments of flight. Shut-off valve 46 may be selectively opened or closed to control the bleed air flow rate to the auxiliary compressor 42. The LPC bleed air enters into an inlet of auxiliary compressor 42, and passes out an outlet of auxiliary compressor 42 into bleed passage 52 and into ECS 38. According to one embodiment, during the cruising segment of the flight, the engine 10 provides all of the LPC compressed air for pressurization of the aircraft's cabin. In this case, the LPC bleed air is extracted from low pressure compressor 22 and flows through the auxiliary compressor 42 without substantial change to its pressure or temperature. In another embodiment, the auxiliary compressor 42 adds energy to the LPC bleed air to increase pressure and temperature to suitable levels below a certain threshold before passing the conditioned LPC bleed air to the ECS 38. In one or more embodiments, heat exchangers may be positioned along bleed passage 40 or bleed passage 52 in order to lower the temperature (i.e., remove energy) from the LPC bleed air.

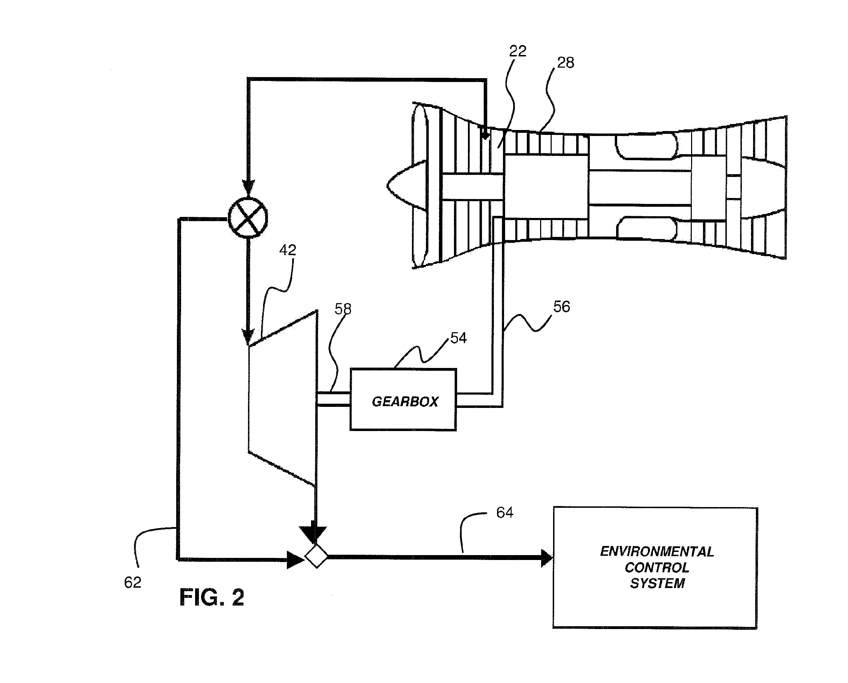

During the descent segment of flight, the auxiliary compressor 42 augments the compressed LPC bleed air when the LPC bleed air cannot provide adequate compressed bleed air for pressurization by the ECS 38. In particular, LPC bleed air from the low pressure compressor 22 is further compressed with the auxiliary compressor 42 in order to condition the LPC bleed air to minimum levels before communicating the compressed air to the ECS 38. The auxiliary compressor 42 is mechanically connected to and is driven by motor 48 in order to compress the extracted air from the low-pressure compressor 22. In other embodiments, the motor 48 is powered by electricity from the aircraft, or may be coupled to a gear box (FIG. 2) that is connected to and driven by the high pressure spool 28, or by a bleed powered boost compressor.

In an embodiment, illustrated in FIG. 2, the auxiliary compressor 42 is mechanically connected to a gearbox 54. Particularly, the auxiliary compressor 42 is mechanically connected to and driven by a gearbox 54 via a shaft 58 in order to compress the extracted air from the low-pressure compressor 22, while all other aspects remain substantially the same as those of gas turbine engine 10 and bleed energy system 12 shown and illustrated in FIG. 1. The gearbox 54 is connected to a high pressure spool 28. The rotating spool 28 correspondingly controls gearbox 54 via bleed line 56 and causes the gearbox 54 to control the rotation of the shaft 58 and drive the auxiliary compressor 42 in order to compress the extracted air from the low pressure compressor 22. Also, bleed passage 62 is provided to divert some or all of the bleed air from auxiliary compressor 42 into bleed passage 62 and returned back to bleed passage 64 when passing bleed air through auxiliary compressor 42 would reduce its temperature and pressure below desirable levels.

The technical effects and benefits of exemplary embodiments include an aircraft pressurization system with only one engine bleed port located at the exit of the low pressure compressor for providing adequate pressurization during all segments of flight except descent. For the descent flight segment, LPC bleed air is compressed to the required pressure by an electric, gearbox mounted, or bleed powered boost compressor.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions, or equivalent arrangement not hereto described will be apparent to those of ordinary skill in the art without departing from the scope of the invention. Additionally, while various embodiment of the invention have been described, it is to be understood that aspects of the invention may include only some of the described embodiments. Accordingly, the invention is not to be seen as limited by the foregoing description, but is only limited by the scope of the appended claims.

## Claims

1. An aircraft pressurization system, comprising:
an auxiliary compressor (42) for further compressing compressed air received from a low pressure compressor section (22) of a gas turbine engine (10) while the compressed air is below a predetermined pressure level;
a bleed passage (40) for fluidically connecting the auxiliary compressor (42) to the low pressure compressor section (22); and
an environmental control system (38) coupled to an output of the auxiliary compressor (42) for conditioning the compressed air to a predetermined level.

2. The aircraft pressurization system of claim 1, further comprising a shut-off valve (46) disposed between the low pressure compressor section (22) and the auxiliary compressor (42) for selectively controlling a flow rate of the compressed air to the auxiliary compressor (42).

3. The aircraft pressurization system of claim 1 or 2, further comprising a bleed valve (44) for connecting the bleed passage (40) to the low-pressure compressor section (22).

4. The aircraft pressurization system of any of claims 1 to 3, further comprising:
a motor (48) for mechanically rotating the auxiliary compressor (42); or
a gear box (54) coupled to the gas turbine engine (10) for mechanically rotating the auxiliary compressor (42).

5. The aircraft pressurization system of any preceding claim, further comprising a heat exchanger positioned along the bleed passage (40).

6. The aircraft pressurization system of any preceding claim, wherein the auxiliary compressor (42) is disabled while a pressure of the compressed air exceeds the predetermined pressure level.

7. A method for pressurizing an aircraft, comprising:
receiving air compressed to a first pressure via a low pressure compressor section (22) of a gas turbine engine (10);
compressing, via an auxiliary compressor (42), the compressed air to a second pressure while the compressed air is below a predetermined pressure level;
fluidically connecting, via a bleed passage (40), the auxiliary compressor (42) to the low pressure compressor section (22); and
conditioning the compressed air to a predetermined level via an environmental control system (38) coupled to the auxiliary compressor (42).

8. The method of claim 7, further comprising selectively controlling a flow rate of the compressed air to the auxiliary compressor (42) via a shut-off valve (46).

9. The method of claim 7 or 8, further comprising connecting, via a bleed valve (44), the bleed passage (40) to the low-pressure compressor section (22).

10. The method of any of claims 7 to 9, further comprising mechanically rotating the auxiliary compressor (42)via:
a motor (48); or
a gear box (54) coupled to the gas turbine engine (10).

11. The method of any of claims 7 to 10, further comprising lowering a temperature of the compressed air in the bleed passage (40).

12. The method of any of claims 7 to 11, further comprising disabling the auxiliary compressor (42) while the first pressure of the compressed air exceeds the predetermined pressure level.

13. The method of any of claims 7 to 12, wherein the second compressor is the same as the predetermined pressure level.

14. The aircraft: pressurization system or method of any preceding claim, wherein the environmental control system (38) provides pressurized air to an aircraft's cabin, or the conditioned air is pressurized for delivery to an aircraft cabin.

15. The aircraft pressurization system or method of any preceding claim, wherein the auxiliary compressor (42) is a bleed driven compressor.
